# EUROPEAN PATENT APPLICATION

(11) **EP 3 886 522 A1**
(43) Date of publication of application: **29.09.2021**
(21) Application number: 18943259.4
(22) Date of filing: 12.12.2018
(51) Int. Cl.: H04W 72/12

(54) **RANDOM ACCESS METHOD, TERMINAL DEVICE, AND ACCESS NETWORK DEVICE**

(71) Applicant: GUANGDONG OPPO MOBILE TELECOMMUNICATIONS CORP., LTD., Dongguan, Guangdong 523860 (CN)
(72) Inventor: XU, Jing, Dongguan, Guangdong 523860 (CN)
(74) Representative: RGTH
(86) International application number: PCT/CN2018/120576
(87) International publication number: WO 2020/118559

(57) **Abstract**

Provided in embodiments of the present application are a random access method and a terminal device. The random access method of the present application comprises: the terminal device sends a first signal to an access network device by means of an available first resource, and sends second information to the access network device by means of a second resource, first information and the second information being used for requesting random access; and the terminal device receives third information returned by the access network device, the third information being used for indicating whether the random access succeeds. According to the embodiments of the present application, the delay of a random access process can be reduced.

## Description

### TECHNICAL FIELD

Embodiments of the disclosure relate to communication technologies, and particularly to a method for random access, a terminal device and an access network device.

### BACKGROUND

In a wireless communication system, random access is a key step for establishing an Uplink (UL) communication connection between a terminal device and a base station. In a process of establishing the UL communication connection between the terminal device and the base station, downlink synchronization is implemented at first. The terminal device acquires system information such as a bandwidth, a frame structure parameter, a System Frame Number (SFN) and Random Access Channel (RACH) information through a downlink common channel.

Random access in a Long Term Evolution (LTE) system is classified into contention based random access and non-contention based random access. Contention based random access is usually completed through four steps. A random access process in a 5th-Generation (5G) system adopts a four-step RACH process in LTE, which has a higher latency overhead, and cannot meet data transmission demands for a low-latency and high-reliability scenario in the 5G system.

### SUMMARY

The embodiments of the disclosure provide a method for random access, a terminal device and an access network device, to reduce a latency of a random access process.

According to a first aspect, in the embodiments of the disclosure, there is provided a method for random access, which includes the following operations.

A terminal device transmits first information to an access network device through an available first resource, and transmits second information to the access network device through a second resource, the first information and the second information being configured to request for random access.

The terminal device receives third information returned by the access network device, the third information being configured to indicate whether the random access succeeds.

According to a second aspect, in the embodiments of the disclosure, there is provided a method for random access, which includes the following operations.

An access network device receives first information transmitted by a terminal device through an available first resource, and receives second information transmitted by the terminal device through a second resource, the first information and the second information being configured to request for random access.

The access network device returns third information to the terminal device, the third information being configured to indicate whether the random access succeeds.

According to a third aspect, in the embodiments of the disclosure, there is provided a terminal device, which includes a processing module and a receiving module.

The processing module is configured to control a transmitting module to transmit first information to an access network device through an available first resource, and control the transmitting module to transmit second information to the access network device through a second resource, the first information and the second information being configured to request for random access.

The receiving module is configured to receive third information returned by the access network device, the third information being configured to indicate whether the random access succeeds.

According to a fourth aspect, in the embodiments of the disclosure, there is provided an access network device, which includes a processing module and a transmitting module.

The processing module is configured to control a receiving module to receive first information transmitted by a terminal device through an available first resource, and control the receiving module to receive second information transmitted by the terminal device through a second resource.

The transmitting module is configured to return third information to the terminal device, the third information being configured to indicate whether the random access succeeds.

According to a fifth aspect, in the embodiments of the disclosure, there is provided a terminal device, which includes a memory and a processor.

The memory stores computer-executable instructions.

The processor executes the computer-executable instructions stored in the memory, to enable the processor to execute the method for random access as described in the first aspect.

According to a sixth aspect, in the embodiments of the disclosure, there is provided an access network device, which includes a memory and a processor.

The memory stores computer-executable instructions.

The processor executes the computer-executable instructions stored in the memory, to enable the processor to execute the method for random access as described in the second aspect.

According to a seventh aspect, in the embodiments of the disclosure, there is provided a computer-readable storage medium, in which computer-executable instructions are stored. The computer-executable instructions are executed by a processor to implement the method for random access as described in the embodiments of the disclosure.

According to the method for random access, terminal device and access network device of the embodiments of the disclosure, the terminal device transmits the first information to the access network device through the available first resource, and transmits the second information to the access network device through the second resource to request the access network device for random access. The terminal device receives the third information returned by the access network device to determine whether random access succeeds. Compared with a four-step random access process in a conventional art, the method for random access of the embodiments of the disclosure has the advantages that a latency overhead of a random access process can be reduced to meet data transmission demands for a low-latency and high-reliability scenario in a 5G system.

### BRIEF DESCRIPTION OF THE DRAWINGS

In order to describe the technical solutions in the embodiments of the disclosure or the conventional art more clearly, the drawings required to be used in descriptions about the embodiments or the conventional art will be simply introduced below. It is apparent that the drawings described below are some embodiments of the disclosure. Other drawings may further be obtained by those of ordinary skill in the art according to these drawings without creative work.
FIG. 1 is a schematic diagram of an application scenario according to an embodiment of the disclosure.
FIG. 2 is a flowchart of a method for random access according to an embodiment of the disclosure.
FIG. 3 is a flowchart of another method for random access according to an embodiment of the disclosure.
FIG. 4 is a flowchart of another method for random access according to an embodiment of the disclosure.
FIG. 5 is a structure schematic diagram of a terminal device according to an embodiment of the disclosure.
FIG. 6 is a structure schematic diagram of a terminal device according to an embodiment of the disclosure.
FIG. 7 is a structure schematic diagram of an access network device according to an embodiment of the disclosure.
FIG. 8 is a structure schematic diagram of an access network device according to an embodiment of the disclosure.

### DETAILED DESCRIPTION

In order to make the purpose, technical solutions and advantages of the embodiments of the disclosure clearer, the technical solutions in the embodiments of the disclosure will be clearly and completely described below in combination with the drawings in the embodiments of the disclosure. It is apparent that the described embodiments are not all embodiments but part of embodiments of the disclosure. All other embodiments obtained by those of ordinary skill in the art on the basis of the embodiments in the disclosure without creative work shall fall within the scope of protection of the disclosure.

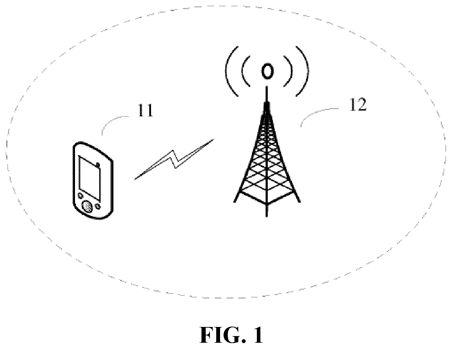

FIG. 1 is a schematic diagram of an application scenario according to an embodiment of the disclosure. As illustrated in FIG. 1, the application scenario includes a terminal device 11 and an access network device 12. The terminal device establishes a communication connection with the access network device 12. A random access process for the terminal device 11 may refer to explanations in the following embodiments.

The terminal device, also called User Equipment (UE), a Mobile Terminal (MT), mobile UE and the like, may communicate with one or more core networks through a Radio Access Network (RAN). The UE may be an MT such as a mobile phone (or called a "cell" phone) and a mobile computer such as a portable, pocket, handheld, computerembedded or vehicle-mounted mobile device, or may be a communication device in Machine Type Communication (MTC).

The access network device may be a device deployed in a RAN to provide a wireless communication function for the terminal device. The access network device may include macro base stations, micro base stations (also called small stations), relay stations, access points and the like in various forms and may also include control nodes in various forms such as a network controller. The control node may be connected with a plurality of base stations and configure resources for a plurality of terminal devices covered by the plurality of base stations. Devices with base station functions in systems adopting different radio access technologies may have different names, for example, an Evolved Node B (eNB or e-NodeB) in LTE and a base station or transmission and receiving point such as gNB in 5G or New Radio (NR). No limits are made thereto in the embodiments of the disclosure.

"A plurality of" involved in the embodiments of the disclosure refers to two or more than two. "And/or" describes an association relationship between associated objects and represents that three relationships may exist. For example, A and/or B may represent three conditions: i.e., independent existence of A, existence of both A and B and independent existence of B. Character "/" usually represents that previous and next associated objects form an "or" relationship.

"First resource" and "second resource" involved in the embodiments of the disclosure are only for distinguishing physical resources for different purposes, and the resource names thereof are not limited thereto.

"First resource configuration information" and "second resource configuration information" involved in the embodiments of the disclosure are only for distinguishing indication information of different physical resources, and the names thereof are not limited thereto.

"First resource" involved in the embodiments of the disclosure refers to a physical resource configured to transmit first information, the first information may be a first signal, and the first signal may be a sequence for random access, for example, a preamble and an access preamble. The first resource may also be called a Physical Random Access Channel (PRACH) Occasion (RO) resource. In the embodiments of the disclosure, one or more reference signals may have an association relationship with one or more first resources, and one or more first resources may have an association relationship with one or more second resources. Specific explanations may refer to explanations in the following embodiments.

"Second resource" involved in the embodiments of the disclosure refers to a physical resource configured to transmit second information, and the second information may include a user Identifier (ID) and/or data. The second resource may also be called a Physical Uplink Shared Channel (PUSCH).

A method for random access of the embodiments of the disclosure will be specifically explained below in combination with the application scenario illustrated in FIG. 1.

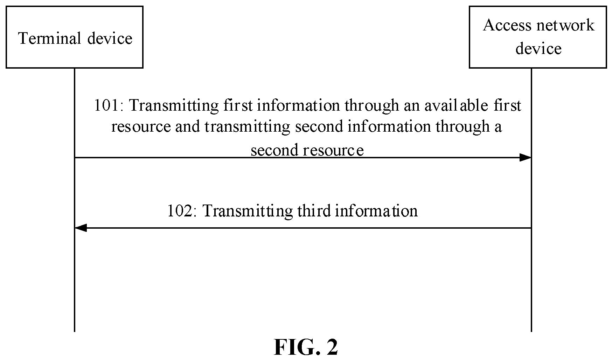

FIG. 2 is a flowchart of a method for random access according to an embodiment of the disclosure. As illustrated in FIG. 2, the method includes the following steps.

In step 101, a terminal device transmits first information to an access network device through an available first resource, and transmits second information to the access network device through a second resource.

The first information and the second information are configured to request for random access. The available first resource and the second resource have an association relationship.

In the embodiment of the disclosure, the first resource has an association relationship, also called a mapping relationship, with a reference signal. During random access, the terminal device detects the reference signal transmitted by the access network device at first, determines the available first resource according to the reference signal and transmits the first information to the access network device through the available first resource. Explanations about the first information may refer to the foregoing description, and elaborations are omitted herein.

In the embodiment of the disclosure, the second resource has the association relationship with the first resource. The terminal device may determine the associated second resource according to the available first resource and transmit the second information to the access network device through the second resource. The second information may be at least one of a user ID, an ID of the terminal device or data (for example, user data).

Correspondingly, the access network device receives the first information transmitted by the terminal device through the available first resource, and receives the second information transmitted by the terminal device through the second resource.

It is to be noted that an execution oder of the two operations that the first information is transmitted through the available first resource and the second information is transmitted through the second resource may specifically be determined according to time-domain positions of the first resource and the second resource. When the terminal device needs to perform random access, the step 101 may be triggered to be executed. The first information and second information in the step 101 may be a message A in a two-step random access process.

In step 102, the access network device transmits third information to the terminal device.

Correspondingly, the terminal device receives the third information returned by the access network device, the third information being configured to indicate whether random access succeeds, and the terminal device determines whether random access succeeds according to the third information. The third information may be a response message. As an implementable manner, the terminal device determines whether access succeeds according to whether the response message carries the user ID. For example, if the response message carries the user ID, the terminal device determines that access succeeds.

The response message may be a Random Access Response (RAR) message. The response message may be a message B in the two-step random access process.

The RAR message may also carry information such as subsequent UL transmission resource allocation information (a UL grant) and a timing advance. The information is not illustrated one by one in the embodiment of the disclosure.

Optionally, the reference signal may be a Synchronization Signal/Physical Broadcast Channel (SS/PBCH) block or a Channel State Information-Reference Signal (CSI-RS).

According to the embodiment, the terminal device transmits the first information to the access network device through the available first resource and transmits the second information to the access network device through the second resource, to request the access network device for random access. The terminal device receives the third information returned by the access network device, and the terminal device determines whether random access succeeds according to the third information. Compared with a four-step random access process in the conventional art, the method for random access of the embodiments of the disclosure has the advantages that a latency overhead of a random access process may be reduced to meet data transmission demands for a low-latency and high-reliability scenario in a 5G system.

In the embodiment of the disclosure, the terminal device may associate first resources, which are associated with one or more reference signals, with one or more second resources. Taking the condition that the reference signal is an SS/PBCH block as an example for description, the terminal device may associate first resources, which are associated with one or more SS Blocks (SSBs) (SS/PBCH blocks), with one or more second resources. An SSB includes a Primary Synchronization Signal (PSS), a Secondary Synchronization Signal (SSS) and aPBCH.

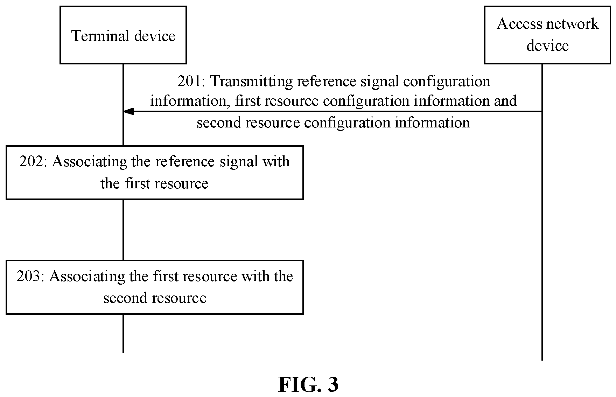

FIG. 3 is a flowchart of a method for random access according to another embodiment of the disclosure. As illustrated in FIG. 3, based on the embodiment illustrated in FIG. 2, the method of the embodiment may further include the following steps.

In step 201, the access network device transmits reference signal configuration information, first resource configuration information and second resource configuration information to the terminal device.

Correspondingly, the terminal device receives the reference signal configuration information, first resource configuration information and second resource configuration information which are transmitted by the access network device.

The reference signal configuration information is configured to indicate the reference signal, for example, indicating one or more of: an index of the reference signal, a period of the reference signal, the number of reference signals in a period and the like. The first resource configuration information is configured to indicate the first resource, for example, indicating one or more of: a resource position of the first resource, a configuration period of the first resource and the like. The second resource configuration information is configured to indicate the second resource, for example, indicating one or more of: a resource position of the second resource, a period of the second resource and the like. That is, the first resource and the second resource may be periodic physical resources.

The reference signal configuration information, the first resource configuration information and the second resource configuration information may be transmitted through a broadcast message or Radio Resource Control (RRC) dedicated signaling. The three pieces of information may be transmitted through one or more broadcast messages or RRC dedicated signaling.

In step 202, the terminal device associates a reference signal with the first resource.

Associating the reference signal with the first resource may also be called establishing the mapping relationship between the reference signal and the first resource. As an implementable manner, the terminal device maps the index of the reference signal to the first resource. That is, an association relationship between the first resource and the index of the reference signal is established. It is to be noted that the embodiment of the disclosure is described with the index of the reference signal as an example and other information configured to identify the reference signal may also be adopted. The embodiment of the disclosure is not limited thereto. However, for convenient description, the following embodiment is described with the index of the reference signal as an example.

In step 203, the terminal device associates the first resource with the second resource.

The terminal device may associate the first resource with the second resource and further execute each step in the embodiment illustrated in FIG. 2 for random access. For example, the terminal device detects the reference signal transmitted by the access network device and determines the first resource corresponding to the reference signal, i.e., the available first resource, according to the association relationship between the reference signal and the first resource, to further execute the operation of transmitting the first information in step 101. The terminal device determines the second resource corresponding to the available first resource according to the association relationship between the first resource and the second resource, to further execute the operation of transmitting the second information in step 101.

The first resource may be an RO resource, and the second resource may be a PUSCH resource.

It is to be noted that the access network device may also map the reference signal indicated in the reference signal configuration information to the first resource and perform association processing on the first resource and the second resource according to the reference signal configuration information and the first resource configuration information. In such a manner, the access network device may learn the reference signal selected by the terminal device according to the available first resource having received the first information, and may learn the second resource through which the terminal device transmits the second information according to the association relationship between the first resource and the second resource, to receive the second information transmitted by the terminal device on the second resource. Therefore, the complexity in blind detection for data reception of the access network device is reduced.

According to the embodiment, the terminal device may associate the first resource with the second resource. When the terminal device needs to perform random access, the terminal device detects the reference signal, acquires the available first resource and transmits the first information to the access network device through the available first resource; the terminal device acquires the second resource associated with the available first resource and transmits the second information to the access network device through the second resource to request the access network device for random access. The terminal device receives the third information returned by the access network device to determine whether random access succeeds. Compared with the four-step random access process in the conventional art, the method for random access of the embodiments of the disclosure has the advantages that the latency overhead of the random access process may be reduced to meet the data transmission demands for the low-latency and high-reliability scenario in the 5G system.

Moreover, the access network device may learn the second resource through which the terminal device transmits the second information according to the association relationship between the first resource and the second resource, to receive the second information transmitted by the terminal device on the second resource. Therefore, the complexity in blind detection for data reception of the access network device is reduced.

Both the terminal device and access network device in the embodiments of the disclosure may associate the first resource with the second resource, and a specific association manner may refer to the following explanations. Since the same association manner is adopted by the terminal device and the access network device, steps of which execution bodies are not illustrated in the following embodiment may be implemented by both of the terminal device and the access network device.

As an implementable manner of association, one first resource is associated with at least one second resource, the one first resource being associated with at least one reference signal, or a plurality of first resources are associated with at least one second resource, the plurality of first resources being associated with one or more reference signals that are the same.

That is, one first resource mapped with an index of one or more reference signals that are the same is associated with at least one second resource, or a plurality of first resources mapped with an index of one or more reference signals that are the same are associated with one or more second resources that are the same.

Further explanations are made with the condition that the index of the reference signal is SSB1, the first resource mapped with the SSB1 includes an RO resource 1 and an RO resource 2 and the second resource is PUSCH as an example. In the embodiment of the disclosure, the association manner is associating the RO resource 1 and RO resource 2, which are mapped with the SSB1, with a PUSCH, that is, associating two first resources, which are mapped with an index of the same reference signal, with the same second resource.

The operation that the plurality of first resources are associated with at least one second resource may include the following specific implementation manners.

A first manner: a plurality of first resources, which are associated with one or more reference signals that are the same, within each first period are associated with one second resource within a second period. A specific implementation manner may be associating a plurality of first resources, which are mapped with an index of one or more reference signals that are the same, within each first period are associated with one second resource within the second period.

A second manner: a plurality of first resources, which are associated with one or more reference signals that are the same, within each first period are associated with a group of second resources within the second period, the group of second resources including a plurality of second resources. A specific implementation manner may be associating a plurality of first resources, which are mapped with an index of one or more reference signals that are the same, within each first period are associated with a group of second resources within the second period.

The first period is a period of the periodic first resource, and the second period is a period of the periodic second resource.

The first period may be any one of: one or more PRACH configuration periods, or one or more association periods, the association periods including a plurality of PRACH configuration periods, or one or more SS/PBCH blocks to ROs mapping cycles, or a first threshold, the first threshold including at least one of 10ms, 20ms, 40ms, 80ms or 160ms.

The second period may be any one of: one or more first periods, or one or more PRACH configuration periods, or one or more association periods, the association periods including a plurality of PRACH configuration periods, or one or more SS/PBCH blocks to ROs mapping cycles, or a second threshold, the second threshold including at least one of 10ms, 20ms, 40ms, 80ms or 160ms.

### The first manner will be explained below.

The reference signal configuration information further includes mapping indication information, the mapping indication information being configured to indicate associating Q reference signals with M first resources. Specifically, the mapping indication information may be configured to indicate mapping indexes of the Q reference signals to the M first resources.

The mapping indication information may be X, X=Q/M or X=M/Q. It is to be noted that the mapping indication information is only an information name and the information name is not limited thereto.

As an implementable manner of the first manner, every Z*M first resources, which are associated with Z*Q reference signals that are the same, within each first period are associated with one second resource within the second period respectively, Q being a positive integer, M being a positive integer and Z being a positive integer.

That is, every Z*M first resources, which are mapped with indexes of Z*Q reference signals that are the same, within each first period are associated with one second resource within the second period respectively.

Specific values of Q and M may be determined according to the mapping indication information, and Z may be determined through the broadcast message, the RRC dedicated signaling, a predefinition and the like. Z may be called second-dimension grouping, and second-dimension grouping is configured to group reference signals according to a larger granularity. The mapping indication information may be called first-dimension grouping, and first-dimension grouping is configured to group reference signals according to first resources corresponding to the reference signals. A specific implementation manner may be grouping indexes of reference signals in different dimensions.

Descriptions are made with the condition that indexes of reference signals include SSB1 and SSB2, a first resource mapped with the SSB1 includes an RO resource 1 and an RO resource 2, a first resource mapped with the SSB2 includes an RO resource 3 and an RO resource 4 and a second resource includes a PUSCH as an example. The SSB1 may be a group in first-dimension grouping, and the SSB2 may be another group in first-dimension grouping. Assuming that Z in the broadcast message is 2, it indicates that the SSB1 and the SSB2 are groups in second-dimension grouping, all the first resources mapped with the SSB 1 and the SSB2 are associated with the same PUSCH. That is, all the RO resource 1, the RO resource 2, the RO resource 3 and the RO resource 4 are associated with the same PUSCH.

When Z=1, every M first resources, which are mapped with indexes of Q reference signals that are the same, within each first period are associated with one second resource within the second period respectively based on first-dimension grouping.

One or more first resources, which are mapped with an index of each reference signal in the same first-dimension grouping, are associated with one second resource within the second period.

When Z is greater than 1, every Z*M first resources, which are mapped with indexes of Z*Q reference signals that are the same, within each first period are associated with one second resource within the second period respectively based on first-dimension grouping and second-dimension grouping.

One or more first resources, which are mapped with an index of each reference signal in the same second-dimension grouping, are associated with one second resource within the second period.

A specific implementation manner of associating every Z*M first resources, which are associated with Z*Q reference signals that are the same, within each first period with one second resource within the second period respectively may be sequential association or may be association based on another rule.

As an implementable manner, a 1st first resource to a (Z*M)-th first resource, which are associated with Z*Q reference signals that are the same, within each first period are associated with a 1st second resource within the second period. An ((i-1)*Z*M+1)-th first resource to an (i*Z*M)-th first resource, which are associated with Z*Q reference signals that are the same, within each first period are associated with an i-th second resource within the second period, i being valued to be 2 to N/(Z*Q) respectively and N being the number of reference signals, i.e., the number of the reference signals transmitted by the access network device within the period of the reference signal. N may be carried in the reference signal configuration information. As described above, the period of the reference signal may be configured through the reference signal configuration information, and the period of the reference signal may be the same as the first period or may be different from the first period.

As an implementable manner of the operation in step 101, that the second information is transmitted to the access network device through the second resource, when the available first resource is the 1st first resource to the (Z*M)-th first resource, the terminal device acquires the 1st second resource corresponding to the 1st first resource to the (Z*M)-th first resource, and transmits the second information to the access network device through the 1st second resource; or when the available first resource is the ((i-1)*Z*M+1)-th first resource to the (i*Z*M)-th first resource, the terminal device acquires the i-th second resource corresponding to the ((i-1)*Z*M+1)-th first resource to the (i*Z*M)-th first resource, and transmits the second information to the access network device through the i-th second resource.

The first manner will be described below with scenarios of different values of Z, Q and M as examples. Descriptions are made with the condition that the first period is a PRACH configuration period, the second period is a PUSCH resource period and the PUSCH resource period is equal to an association period as an example.

The association period is explained as follows. If first resources within a PRACH configuration period are not enough to provide associated first resources for each reference signal, a plurality of PRACH configuration periods need to form an association period. First resources within the association period are enough to ensure that each reference signal may be associated with one or more first resources.

A first scenario: Z=1, Q=1 and M=2, the terminal device learns through a configuration of the access network device that there are four reference signals, and one (Q=1) reference signal is mapped to two (M=2) first resources, and the terminal device learns through the first resource configuration information transmitted by the access network device that there are 8 first resources within the PRACH configuration period. An implementable manner of the first manner that first resources mapped with an index of the same reference signal are associated with the same second resource is explained through the first scenario.

The terminal device maps an index of a 1st reference signal to a 1st group of first resources in the PRACH configuration period, the 1st group of first resources including a 1st first resource and a 2nd first resource. The terminal device maps an index of a 2nd reference signal to a 2nd group of first resources in the PRACH configuration period, the 2nd group of first resources including a 3rd first resource and a 4th first resource. The terminal device maps a 3rd reference signal to a 3rd group of first resources in the PRACH configuration period, the 3rd group of first resources including a 5th first resource and a 6th first resource. The terminal device maps a 4th reference signal to a 4th group of first resources in the PRACH configuration period, the 4th group of first resources including a 7th first resource and a 8th first resource.

The terminal device learns through the configuration of the access network device that there are 4 second resources.

The terminal device may associate the 1st group of first resources and the 1st second resource, associate the 2nd group of first resources and the 2nd second resource, associate the 3rd group of first resources and the 3rd second resource and associate the 4th group of first resources and the 4th second resource.

That is, first resources (for example, the 1st group of first resources) mapped with an index of the same reference signal are associated with the same second resource.

In the first scenario, an implementable manner of step 102 is that: when the available first resource is the 1st first resource or the 2nd first resource, the terminal device acquires the 1st second resource which corresponds to the 1st first resource or the 2nd first resource, and transmits the second information to the access network device through the 1st second resource within the PUSCH resource period.

Alternatively, when the available first resource is the 3rd first resource or the 4th first resource, the terminal device acquires the 2nd second resource which corresponds to the 3rd first resource or the 4th first resource, and transmits the second information to the access network device through the 2nd second resource within the PUSCH resource period.

Alternatively, when the available first resource is the 5th first resource or the 6th first resource, the terminal device acquires the 3rd second resource which corresponds to the 5th first resource or the 6th first resource, and transmits the second information to the access network device through the 3rd second resource within the PUSCH resource period.

Alternatively, when the available first resource is the 7th first resource or the 8th first resource, the terminal device acquires the 4th second resource which corresponds to the 7th first resource or the 8th first resource, and transmits the second information to the access network device through the 4th second resource within the PUSCH resource period.

According to the embodiment, first resources mapped with an index of the same reference signal may be associated with the same second resource, that is, a plurality of first resources are associated with the same second resource, so that second resources reserved for random access may be reduced, and the resource utilization rate may be improved.

A second scenario: Z=1, Q=2, M=1, the terminal device learns through the configuration of the access network device that there are 8 reference signals, and two (Q=2) reference signals are mapped to one (M=1) first resource. The terminal device learns through the first resource configuration information transmitted by the access network device that the PRACH configuration period is 10ms and there are 4 first resources within the PRACH configuration period, and the terminal device learns that one PRACH configuration period forms an association period, the association period is 10ms and there are 4 first resources within the association period. An implementable manner of the first manner that first resources mapped with indexes of the same group of reference signals are associated with the same second resource is explained through the second scenario. In the embodiment, since Z=1, the indexes of the same group of reference signals refer to the same first-dimension grouping.

Indexes of a 1st group of reference signals are mapped to a 1st first resource in the association period, the indexes of the 1st group of reference signals including the index of a 1st reference signal and the index of a 2nd reference signal. Indexes of a 2nd group of reference signals are mapped to a 2nd first resource in the association period, the indexes of the 2nd group of reference signals including the index of a 3rd reference signal and the index of a 4th reference signal. Indexes of a 3rd group of reference signals are mapped to a 3rd first resource in the association period, the indexes of the 3rd group of reference signals including the index of a 5th reference signal and the index of a 6th reference signal. Indexes of a 4th group of reference signals are mapped to a 4th first resource in the association period, the indexes of the 4th group of reference signals including the index of a 7th reference signal and the index of a 8th reference signal.

The terminal device learns through the configuration of the access network device that there are 4 second resources.

The terminal device may associate the 1st first resource with a 1st second resource, associate the 2nd first resource with a 2nd second resource, associate the 3rd first resource with a 3rd second resource and associate the 4th first resource with a 4th second resource.

That is, first resources mapped with indexes of the same group of reference signals (for example, indexes of a 1st group of first reference signals) are associated with the same second resource (for example, the 1st second resource).

In the second scenario, an implementable manner of step 102 is that: when the available first resource is the 1st first resource, the terminal device acquires the 1st second resource corresponding to the 1st first resource, and transmits the second information to the access network device through the 1st second resource within the PUSCH resource period.

Alternatively, when the available first resource is the 2nd first resource, the terminal device acquires the 2nd second resource corresponding to the 2nd first resource, and transmits the second information to the access network device through the 2nd second resource within the PUSCH resource period.

Alternatively, when the available first resource is the 3rd first resource, the terminal device acquires the 3rd second resource corresponding to the 3rd first resource, and transmits the second information to the access network device through the 3rd second resource within the PUSCH resource period.

Alternatively, when the available first resource is the 4th first resource, the terminal device acquires the 4th second resource corresponding to the 4th first resource, and transmits the second information to the access network device through the 4th second resource within the PUSCH resource period.

According to the embodiment, first resources mapped with indexes of the same group of reference signals may be associated with the same second resource, so that the second resources reserved for random access may be reduced, and the resource utilization rate may be improved.

A third scenario: Z=2, Q=1, M=1, the terminal device learns through the configuration of the access network device that there are 8 reference signals, and one (Q=1) reference signal is mapped to one first resource (M=1). The terminal device learns through the first resource configuration information transmitted by the access network device that the PRACH configuration period is 10ms and there are 4 first resources in the PRACH configuration period, and the terminal device learns that two PRACH configuration periods form an association period, the association period is 20ms and there are 8 first resources within the association period. An implementable manner of the first manner that first resources mapped with indexes of the same group of reference signals are associated with the same second resource is explained through the third scenario. In the embodiment, since Z=2, the indexes of the same group of reference signals refer to the same second-dimension grouping.

The terminal device maps an index of a 1st reference signal to a 1st first resource in the association period, maps an index of a 2nd reference signal to a 2nd first resource in the association period, maps an index of a 3rd reference signal to a 3rd first resource in the association period, maps an index of a 4th reference signal to a 4th first resource in the association period. By such analogy, the terminal device proceeds until indexes of the 8 reference signals are mapped to respective first resources in the association period.

The terminal device learns through the configuration of the access network device that there are 4 second resources.

Since Z=2, the terminal device may associate the 1st first resource and the 2nd first resource with the 1st second resource, associate the 3rd first resource and the 4th first resource with the 2nd second resource, associate the 5th first resource and the 6th first resource with the 3rd second resource, and associate the 7th first resource and the 8th first resource with the 4th second resource.

That is, first resources mapped with indexes of the same group of reference signals are associated with the same second resource. The indexes of the same group of reference signals refer to the same second-dimension grouping.

In the third scenario, an implementable manner of step 102 is that: when the available first resource is the 1st first resource or the 2nd first resource, the terminal device acquires the 1st second resource which corresponds to the 1st first resource or the 2nd first resource, and transmits the second information to the access network device through the 1st second resource within the PUSCH resource period.

Alternatively, when the available first resource is the 3rd first resource or the 4th first resource, the terminal device acquires the 2nd second resource which corresponds to the 3rd first resource or the 4th first resource, and transmits the second information to the access network device through the 2nd second resource within the PUSCH resource period.

Alternatively, when the available first resource is the 5th first resource or the 6th first resource, the terminal device acquires the 3rd second resource which corresponds to the 5th first resource or the 6th first resource, and transmits the second information to the access network device through the 3rd second resource within the PUSCH resource period.

Alternatively, when the available first resource is the 7th first resource or the 8th first resource, the terminal device acquires the 4th second resource which corresponds to the 7th first resource or the 8th first resource, and transmits the second information to the access network device through the 4th second resource within the PUSCH resource period.

According to the embodiment, first resources mapped with indexes of the same group of reference signals may be associated with the same second resource, so that the second resources reserved for random access may be reduced, and the resource utilization rate may be improved.

### The second manner will be explained below.

The reference signal configuration information further includes mapping indication information, the mapping indication information being configured to indicate associating Q reference signals with M first resources. Specifically, the mapping indication information may be configured to indicate mapping indexes of the Q reference signals to the M first resources.

The mapping indication information may be X, X=Q/M or X=M/Q. It is to be noted that the mapping indication information is only an information name and the information name is not limited thereto.

As an implementable manner of the second manner, the terminal device associates every Z*M first resources, which are associated with Z*Q reference signals that are the same, within each first period with a group of second resources within the second period respectively, Q being a positive integer, M being a positive integer and Z being a positive integer.

That is, every Z*M first resources, which are mapped with indexes of Z*Q reference signals that are the same, within each first period are associated with a group of second resources within the second period respectively.

Specific explanations about Q, M and Z may refer to the explanations in the first manner, and elaborations are omitted herein.

A difference between the second manner and the first manner is that first resources associated with the same group of reference signals are associated with the same group of second resources, that is, first resources mapped with indexes of the same group of reference signals are associated with the same group of second resources. That is, in the embodiment, second resources are grouped, and each group of second resources may include a plurality of second resources.

Descriptions are made with the condition that indexes of reference signals include SSB1 and SSB2, a first resource mapped with the SSB1 includes an RO resource 1 and an RO resource 2, a first resource mapped with the SSB2 includes an RO resource 3 and an RO resource 4 and a second resource includes a PUSCH1 and a PUSCH2 as an example. The SSB1 may be a group in first-dimension grouping, and the SSB2 may be another group in first-dimension grouping. Assuming that Z in the broadcast message is 2, it indicates that the SSB1 and the SSB2 are groups in second-dimension grouping, all the first resources mapped with the SSB1 and the SSB2 are associated with the PUSCH1 and the PUSCH2. That is, all the RO resource 1, the RO resource 2, the RO resource 3 and the RO resource 4 are associated with the same group of PUSCHs, the group of PUSCHs including the PUSCH1 and the PUSCH2.

When Z=1, every M first resources, which are mapped with indexes of Q reference signals that are the same, within each first period are associated with a group of second resources within the second period respectively based on first-dimension grouping.

One or more first resources, which are mapped with an index of each reference signal in the same first-dimension grouping, are associated with a group of second resources within the second period.

When Z is greater than 1, every Z*M first resources, which are mapped with indexes of Z*Q reference signals that are the same, within each first period are associated with a group of second resources within the second period respectively based on first-dimension grouping and second-dimension grouping.

One or more first resources, which are mapped with an index of each reference signal in the same second-dimension grouping, are associated with a group of second resources within the second period.

A specific implementation manner of associating every Z*M first resources, which are associated with Z*Q reference signals that are the same, within each first period with a group of second resources within the second period respectively may be sequential association or may be association based on another rule.

As an implementable manner, a 1st first resource to a (Z*M)-th first resource, which are associated with Z*Q reference signals that are the same, within each first period are associated with a 1st group of second resources within the second period, the 1st group of second resources including a 1st second resource to a K-th second resource. An ((i-1)*Z*M+1)-th first resource to an (i*Z*M)-th first resource, which are associated with Z*Q reference signals that are the same, within each first period are associated with an i-th group of second resources within the second period, the i-th group of second resources including a (K*(i-1)+1)-th second resource to an iK-th second resource, i being valued to be 2 to N/(Z*Q) respectively and N being the number of reference signals. N may be carried in the reference signal configuration information.

K is configured to indicate the number of second resources in a group of second resources, and may be acquired through the broadcast message, the RRC dedicated signaling or the predefinition manner.

As an implementable manner of step 102, when the available first resource is the 1st first resource to the (Z*M)-th first resource, the terminal device acquires the 1st group of second resources which correspond to the 1st first resource to the (Z*M)-th first resource, and transmits the second information to the access network device through the 1st group of second resources; or when the available first resource is the ((i-1)*Z*M+1)-th first resource to the (i*Z*M)-th first resource, the terminal device acquires the i-th group of second resources which correspond to the ((i-1)*Z*M+1)-th first resource to the (i*Z*M)-th first resource, and transmits the second information to the access network device through the i-th group of second resources.

The second manner will be described below with scenarios of different values of Z, Q and M as examples. Descriptions are made with the condition that the first period is a PRACH configuration period, the second period is a PUSCH resource period and the PUSCH resource period is equal to an association period as an example.

A fourth scenario: Z=1, Q=1, M=8, the terminal device learns through the configuration of the access network device that there are 4 reference signals, and one (Q=1) reference signal is mapped to eight (M=8) first resources, The terminal device learns through the first resource configuration information transmitted by the access network device that the PRACH configuration period is 10ms and there are 8 first resources in the PRACH configuration period, and the terminal device learns that four PRACH configuration periods form an association period, the association period is 40ms and there are 32 first resources in the association period. An implementable manner of the second manner that first resources mapped with an index of the same reference signal are associated with the same group of second resources is explained through the fourth scenario.

Since Z=1, the terminal device maps an index of a 1st reference signal to a 1st group of first resources in the association period, the 1st group of first resources including a 1st first resource to a 8th first resource. The terminal device maps an index of a 2nd reference signal to a 2nd group of first resources in the association period, the 2nd group of first resources including a 9th first resource to a 16th first resource. The terminal device maps an index of a 3rd reference signal to a 3rd group of first resources in the association period, the 3rd group of first resources including a 17th first resource to a 24th first resource. The terminal device maps an index of a 4th reference signal to a 4th group of first resources in the association period, the 4th group of first resources including a 25th first resource to a 32th first resource.

The terminal device learns through the configuration of the access network device that there are 16 second resources.

The terminal device may associate the 1st group of first resources with a 1st group of second resources, the 1st group of second resources including a 1st second resource to a 4th second resource. The terminal device may associate the 2nd group of first resources with a 2nd group of second resources, the 2nd group of second resources including a 5th second resource to a 8th second resource. The terminal device may associate the 3rd group of first resources with a 3rd group of second resources, the 3rd group of second resources including a 9th second resource to a 12th second resource. The terminal device may associate the 4th group of first resources with a 4th group of second resources, the 4th group of second resources including a 13th second resource to a 16th second resource.

That is, first resources (for example, the 1st group of first resources) mapped with an index of the same reference signal are associated with the same group of second resources (for example, the 1st group of second resources).

In the fourth scenario, an implementable manner of step 102 is that: when the available first resource is the 1st first resource to the 8th first resource, the terminal device acquires the 1st group of second resources which correspond to the 1st first resource to the 8th first resource, and transmits the second information to the access network device through the 1st group of second resources within the PUSCH resource period.

Alternatively, when the available first resource is the 9th first resource to the 16th first resource, the terminal device acquires the 2nd group of second resources which correspond to the 9th first resource to the 16th first resource, and transmits the second information to the access network device through the 2nd group of second resources within the PUSCH resource period.

Alternatively, when the available first resource is the 17th first resource to the 24th first resource, the terminal device acquires the 3rd group of second resources which correspond to the 17th first resource to the 24th first resource, and transmits the second information to the access network device through the 3rd group of second resources within the PUSCH resource period.

Alternatively, when the available first resource is the 25th first resource to the 32th first resource, the terminal device acquires the 4th group of second resources which correspond to the 25th first resource to the 32th first resource, and transmits the second information to the access network device through the 4th group of second resources within the PUSCH resource period.

According to the embodiment, first resources mapped with an index of the same reference signal may be associated with the same group of second resources, that is, a plurality of first resources are associated with the same second resource, so that the second resources reserved for random access may be reduced, and the resource utilization rate may be improved.

A fifth scenario: Z=1, Q=2, M=1, K=2, the terminal device learns through the configuration of the access network device that there are 8 reference signals, and two (Q=2) reference signals are mapped to one (M=1) first resource. The terminal device learns through the first resource configuration information transmitted by the access network device that the PRACH configuration period is 10ms and there are 4 first resources in the PRACH configuration period, and the terminal device learns that one PRACH configuration period forms an association period, the association period is 10ms and there are 4 first resources in the association period. An implementable mode of the second manner that first resources mapped with indexes of the same group of reference signals are associated with the same group of second resources is explained through the fifth scenario.

Since Z=1 and Q=2, that is, indexes of reference signals are grouped based on first-dimension grouping, the terminal device maps indexes of a 1st group of reference signals to a 1st first resource in the association period, the indexes of the 1st group of reference signals including the index of a 1st reference signal and the index of a 2nd reference signal. The terminal device maps indexes of a 2nd group of reference signals to a 2nd first resource in the association period, the indexes of the 2nd group of reference signals including the index of a 3rd reference signal and the index of a 4th reference signal. The terminal device maps indexes of a 3rd group of reference signals to a 3rd first resource in the association period, the indexes of the 3rd group of reference signals including the index of a 5th reference signal and the index of a 6th reference signal. The terminal device maps indexes of a 4th group of reference signals to a 4th first resource in the association period, the indexes of the 4th group of reference signals including the index of a 7th reference signal and the index of a 8th reference signal.

The terminal device learns through the configuration of the access network device that there are 8 second resources.

The terminal device may associate the 1st first resource and a 1st group of second resources, the 1st group of second resources (K=2) including a 1st second resource and a 2nd second resource. The terminal device may associate the 2nd first resource and a 2nd group of second resources, the 2nd group of second resources including a 3rd second resource and a 4th second resource. The terminal device may associate the 3rd first resource and a 3rd group of second resources, the 3rd group of second resources including a 5th second resource and a 6th second resource. The terminal device may associate the 4th first resource and a 4th group of second resources, the 4th group of second resources including a 7th second resource and a 8th second resource.

That is, first resources mapped with indexes of the same group of reference signals (for example, indexes of a 1st group of first reference signals) are associated with the same group of second resources (for example, the 1st group of second resources).

In the fifth scenario, an implementable manner of step 102 is that: when the available first resource is the 1st first resource, the terminal device acquires the 1st group of second resources corresponding to the 1st first resource, and transmits the second information to the access network device through the 1st group of second resources within the PUSCH resource period.

Alternatively, when the available first resource is the 2nd first resource, the terminal device acquires the 2nd group of second resources corresponding to the 2nd first resource, and transmits the second information to the access network device through the 2nd group of second resources within the PUSCH resource period.

Alternatively, when the available first resource is the 3rd first resource, the terminal device acquires the 3rd group of second resources corresponding to the 3rd first resource, and transmits the second information to the access network device through the 3rd group of second resources within the PUSCH resource period.

Alternatively, when the available first resource is the 4th first resource, the terminal device acquires the 4th group of second resources corresponding to the 4th first resource, and transmits the second information to the access network device through the 4th group of second resources within the PUSCH resource period.

According to the embodiment, first resources mapped with indexes of the same group of reference signals may be associated with the same group of second resources, so that the second resources reserved for random access may be reduced, and the resource utilization rate may be improved.

A sixth scenario: Z=2, Q=1, M=4, K=4, the terminal device learns through the configuration of the access network device that there are 4 reference signals, and one reference signal is mapped to four first resources. The terminal device learns through the first resource configuration information transmitted by the access network device that the PRACH configuration period is 10ms and there are 8 first resources in the PRACH configuration period, and the terminal device learns that two PRACH configuration periods form an association period, the association period is 20ms and there are 16 first resources in the association period. An implementable mode of the second manner that first resources mapped with indexes of the same group of reference signals are associated with the same group of second resources is explained through the sixth scenario.

The terminal device maps an index of a 1st reference signal to a 1st group of first resources in the association period, the 1st group of first resources including a 1st first resource to a 4th first resource. The terminal device maps an index of a 2nd reference signal to a 2nd group of first resources in the association period, the 2nd group of first resources including a 5th first resource to a 8th first resource. The terminal device maps an index of a 3rd reference signal to a 3rd group of first resources in the association period, the 3rd group of first resources including a 9th first resource to a 12th first resource. The terminal device maps an index of a 4th reference signal to a 4th group of first resources in the association period, the 4th group of first resources including a 13th first resource to a 16th first resource.

The terminal device learns through the configuration of the access network device that there are 8 second resources.

Since Z=2 and Q=2, that is, indexes of reference signals are grouped based on second-dimension grouping, the index of the 1st reference signal and the index of the 2nd reference signal form a group, and the index of the 3rd reference signal and the index of the 4th reference signal form a group. The first resources mapped with the index of the 1st reference signal and the index of the 2nd reference signal are associated with the same group of second resources, and the first resources mapped with the index of the 3rd reference signal and the index of the 4th reference signal are associated with the same group of second resources. In the embodiment, the terminal device may associate the 1st group of first resources and the 2nd group of first resources with a 1st group of second resources, the 1st group of second resources including a 1st second resource to a 4th second resource. The terminal device may associate the 3rd group of first resources and the 4th group of first resources with a 2nd group of second resources, the 2nd group of second resources including a 5th second resource to a 8th second resource.

That is, first resources (for example, the 1st group of first resources and the 2nd group of first resources) mapped with indexes of the same group of reference signals are associated with the same group of second resources (for example, the 1st group of second resources).

In the sixth scenario, an implementable manner of step 102 is that: when the available first resource is one first resource in the 1st first resource to the 8th first resource, the terminal device acquires the 1st group of second resources which correspond to the 1st first resource to the 8th first resource, and transmits the second information to the access network device through one or more second resources in the 1st group of second resources within the PUSCH resource period, the 1st group of second resources including the 1st second resource to the 4th second resource.

Alternatively, when the available first resource is one first resource in the 9th first resource to the 16th first resource, the terminal device acquires the 2nd group of second resources which correspond to the 9th first resource to the 16th first resource, and transmits the second information to the access network device through one or more second resources in the 2nd group of second resources within the PUSCH resource period, the 2nd group of second resources including the 5th second resource to the 8th second resource.

According to the embodiment, first resources mapped with indexes of the same group of reference signals may be associated with the same group of second resources, so that the second resources reserved for random access may be reduced, and the resource utilization rate may be improved.

The abovementioned embodiment is described with the condition that the second period is equal to an association period as an example. The embodiments of the disclosure also provide another embodiment described with the condition that the second period is equal to two association periods as an example.

A seventh scenario: Z=1, Q=1, M=8, the terminal device learns through the configuration of the access network device that there are 4 reference signals, and one reference signal is mapped to eight first resources. The terminal device learns through the first resource configuration information transmitted by the access network device that the PRACH configuration period is 10ms and there are 8 first resources in the PRACH configuration period, and the terminal device learns that four PRACH configuration periods form an association period, the association period is 40ms and there are 32 first resources in the association period.

The terminal device maps an index of a 1st (Q=1) reference signal to a 1st group of first resources in the association period, the 1st group (M=8) of first resources including a 1st first resource to a 8th first resource. The terminal device maps an index of a 2nd reference signal to a 2nd group of first resources in the association period, the 2nd group of first resources including a 9th first resource to a 16th first resource. The terminal device maps an index of a 3rd reference signal to a 3rd group of first resources in the association period, the 3rd group of first resources including a 17th first resource to a 24th first resource. The terminal device maps an index of a 4th reference signal to a 4th group of first resources in the association period, the 4th group of first resources including a 25th first resource to a 32th first resource.

The terminal device learns through the configuration of the access network device that there are 32 second resources. A period (PUSCH resource period) of the 32 second resources is 80ms.

The terminal device may associate the 1st first resource with a 1st second resource, and associate the 2nd first resource with a 2nd second resource. By such analogy, the terminal device proceeds until the 32th first resource is associated with the 32th second resource.

That is, each first resource is associated with each second resource. Since the association period is 40ms and the PUSCH resource period is 80ms, two first resources within the association period are associated with the same second resource.

In the seventh scenario, an implementable manner of step 102 is that: when the first resource is a t-th first resource, the terminal device acquires a t-th second resource corresponding to the t-th first resource, and transmits the second information to the access network device through the t-th second resource within the PUSCH resource period, t being a positive integer and t being more than or equal to 1 and less than or equal to 32.

According to the embodiment, a plurality of first resources (for example, two first resources) within the same association period may be associated with the same second resource, so that the second resources reserved for random access may be reduced, and the resource utilization rate may be improved.

The abovementioned embodiments involve the 1st second resource, the 2nd second resource and the like. An order of respective second resources is based on a frequency-domain order and/or a time-domain order. For example, they may ascend progressively according to the frequency-domain order at first and then ascend progressively according to the time-domain order. Alernatively, another order may be adopted. No specific limits are made thereto in the embodiments of the disclosure.

It is to be noted that each embodiment is described with an association relationship between a second resource in a second resource period (for example, a PUSCH resource period) and a first resource in the second resource period. The embodiments of the disclosure also provide a more flexible transmitting manner for the second information, that is, the terminal device may transmit the second information on a second resource which is associated with a first resource and within a certain time range, the time range being longer than the second resource period (for example, the PUSCH resource period). Descriptions will be made below with a specific embodiment.

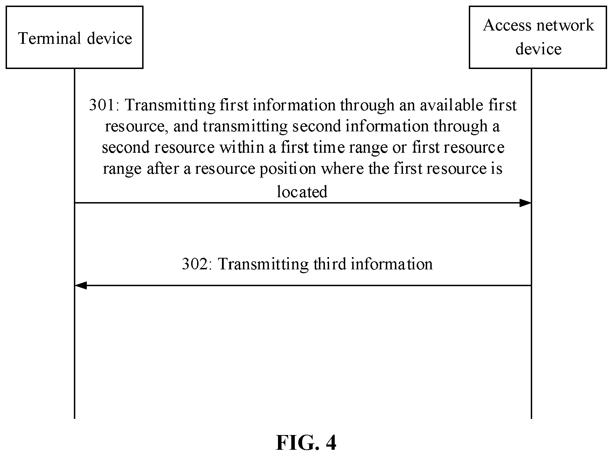

FIG. 4 is a flowchart of another method for random access according to an embodiment of the disclosure. As illustrated in FIG. 4, the method includes the following steps.

In step 301, a terminal device transmits first information to an access network device through an available first resource, and transmits second information to the access network device through a second resource within a first time range or a first resource range after a resource position where the first resource is located.

Specific explanations about transmitting the first information in step 301 may refer to step 101 in the embodiment illustrated in FIG. 2, and elaborations are omitted herein.

As an implementable manner, the first time range may be a time range of one or more PRACH configuration periods after a time-domain starting point or ending point of the first resource. For example, if two PRACH configuration periods are 20ms, the first time range is 20ms after the time-domain starting point or ending point of the first resource. Alternatively, the first time range may be a time boundary of one or more PRACH configuration periods after the time-domain starting point or ending point of the first resource. For example, in case of two PRACH configuration periods, the first time range is after the time-domain starting point or ending point of the first resource and before a time boundary of the two PRACH configuration periods.

As another implementable manner, the first time range may be one or more association periods after the time-domain starting point or ending point of the first resource. For example, if an association period is 20ms, the first time range is 20ms after the time-domain starting point or ending point of the first resource. Alternatively, the first time range may be a boundary of one or more association periods after the time-domain starting point or ending point of the first resource. For example, in case of two association periods, the first time range is before a time boundary of the two association periods.

As another implementable manner, the first time range may be one or more SS/PBCH blocks to ROs mapping cycles after the time-domain starting point or ending point of the first resource. For example, if an SS/PBCH blocks to ROs mapping cycle is 20ms, the first time range is 20ms after the time-domain starting point or ending point of the first resource. Alternatively, the first time range may be before a time boundary of one or more SS/PBCH blocks to ROs mapping cycles after the time-domain starting point or ending point of the first resource. For example, in case of two SS/PBCH blocks to ROs mapping cycles, the first time range is before a time boundary of the two SS/PBCH blocks to ROs mapping cycles.

As another implementable manner, the first time range may be a duration configured by the access network device/predefined duration/pre-configured duration, for example, a third threshold, after the time-domain starting point or ending point of the first resource, the third threshold including at least one of 20ms, 10ms, 40ms, 80ms or 160ms. For example, in case of 20ms, the first time range is 20ms after the time-domain starting point or ending point of the first resource. Alternatively, the first time range may be before a fourth threshold configured by the access network device/predefined fourth threshold/pre-configured fourth threshold after the time-domain starting point or ending point of the first resource. The fourth threshold is a system frame boundary when an SFN mod D=0, D is a positive integer, D is 1, 2, 4, 8 or 16, and mod represents a remainder calculation operation.

It can be understood that the first resource range may be a 1st second resource after the time-domain starting point or ending point of the first resource, or a 1st second resource after specific time, or L second resources, or L second resources after the specific time. L is a positive integer.

In 302, the access network device transmits third information to the terminal device.

Specific explanations about step 302 may refer to step 102 in the embodiment illustrated in FIG. 2, and elaborations are omitted herein.

According to the embodiment, the terminal device acquires the available first resource and transmits the first information to the access network device through the available first resource; the terminal device acquires the second resource associated with the available first resource and transmits the second information to the access network device through the second resource within the first time range or first resource range after the resource position of the first resource, to request the access network device for random access. The terminal device receives the third information returned by the access network device to determine whether random access succeeds. Compared with a four-step random access process in the conventional art, the method for random access of the embodiments of the disclosure has the advantages that a latency overhead of a random access process may be reduced to meet data transmission requirements of a low-latency and high-reliability scenario in a 5G system.

Moreover, the terminal device may transmit the second information on the second resource which is associated with the first resource and within a certain time range or a certain resource range, so that a transmitting manner for the second information is more flexible.

The method for random access provided in the embodiments of the disclosure is described above in detail. A terminal device and access network device provided in the embodiments of the disclosure will be described below.

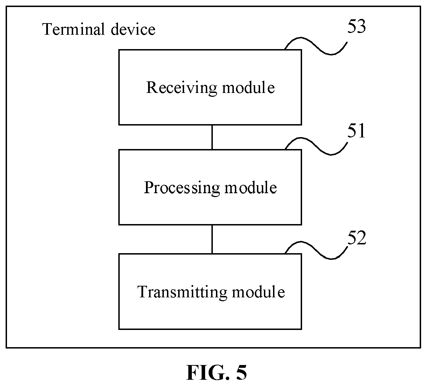

FIG. 5 is a structure schematic diagram of a terminal device according to an embodiment of the disclosure. In the embodiment, there is provided a terminal device. The terminal device may also be called UE, an access terminal, a user unit, a user station, a mobile radio station, a mobile station, a user terminal, a terminal, a wireless communication device, a user agent or a user device. The terminal device may be a smart phone, a cell phone, a cordless phone, a tablet computer, a Personal Digital Assistant (PDA) device, a handheld computer with a wireless communication function or another processing device, vehicle-mounted device and wearable device connected to a wireless modem, etc. As illustrated in FIG. 5, the terminal device 500 includes a processing module 52 and a receiving module 53.

The processing module 52 is configured to control a transmitting module 51 to transmit first information to an access network device through an available first resource, and control the transmitting module 51 to transmit second information to the access network device through a second resource, the first information and the second information being configured to request for random access.

The receiving module 53 is configured to receive third information returned by the access network device, the third information being configured to indicate whether the random access succeeds.

Optionally, the receiving module 53 is further configured to receive reference signal configuration information, first resource configuration information and second resource configuration information which are transmitted by the access network device, the reference signal configuration information being configured to indicate a reference signal, the first resource configuration information being configured to indicate the first resource and the second resource configuration information being configured to indicate the second resource. The processing module 52 is further configured to associate the reference signal with the first resource. The processing module 52 is further configured to associate the first resource with the second resource.

Optionally, the processing module 52 is configured to associate one first resource with at least one second resource, the one first resource being associated with at least one reference signal, or associate a plurality of first resources with at least one second resource, the plurality of first resources being associated with one or more reference signals that are same.

Optionally, a period of the first resource is a first period, and a period of the second resource is a second period. The processing module 52 is configured to associate the plurality of first resources, which are associated with one or more reference signals that are the same, within each first period with one second resource within the second period, or associate the plurality of first resources, which are associated with one or more reference signals that are the same, within each first period with a group of second resources within the second period, the group of second resources including a plurality of second resources.

Optionally, the reference signal configuration information further includes mapping indication information, the mapping indication information being configured to indicate associating Q reference signals with M first resources. The processing module 52 is configured to associate every Z*M first resources, which are associated with Z*Q reference signals that are same, within each first period with the one second resource within the second period respectively, Q being a positive integer, M being a positive integer and M being a positive integer.

Optionally, the reference signal configuration information further includes a number of reference signals. The processing module 52 is configured to associate a 1st first resource to a (Z*M)-th first resource, which are mapped with indexes of Z*Q reference signals that are the same, within each first period with a 1st second resource within the second period, and associate an ((i-1)*Z*M+1)-th first resource to an (i*Z*M)-th first resource, which are associated with Z*Q reference signals that are the same, within each first period with an i-th second resource within the second period, i being valued to be 2 to N/(Z*Q) respectively and N being the number of the reference signals.

Optionally, the processing module 52 is configured to:
responsive to that the available first resource is the 1st first resource to the (Z*M)-th first resource, acquire the 1st second resource which corresponds to the 1st first resource to the (Z*M)-th first resource, and control the transmitting module 51 to transmit the second information to the access network device through the 1st second resource; or
responsive to that the available first resource is the ((i-1)*Z*M+1)-th first resource to the (i*Z*M)-th first resource, acquire the i-th second resource which corresponds to the ((i-1)*Z*M+1)-th first resource to the (i*Z*M)-th first resource, and control the transmitting module 51 to transmit the second information to the access network device through the i-th second resource.

Optionally, the reference signal configuration information further includes mapping indication information, the mapping indication information being configured to associate Q reference signals with M first resources. The processing module 52 is configured to associate every Z*M first resources, which are associated with Z*Q reference signals that are same, within each first period with the group of second resources within the second period respectively, Q being a positive integer, M being a positive integer and M being a positive integer.

Optionally, the reference signal configuration information further includes a number of reference signals. The processing module 52 is configured to associate a 1st first resource to a (Z*M)-th first resource, which are associated with Z*Q reference signals that are the same, within each first period with a 1st group of second resources within the second period, the 1st group of second resources including a 1st second resource to a K-th second resource; and associate an ((i-1)*Z*M+1)-th first resource to an (i*Z*M)-th first resource, which are associated with Z*Q reference signals that are the same, within each first period with an i-th group of second resources within the second period, the i-th group of second resources including a (K*(i-1)+1)-th second resource to an iK-th second resource, i being valued to be 2 to N/(Z*Q) respectively and N being the number of the reference signals.

The terminal device of the embodiment of the disclosure may be configured to execute the technical solution executed by the terminal device in each method embodiment of the disclosure, and an implementation principle and technical effects thereof are similar and will not be elaborated herein.

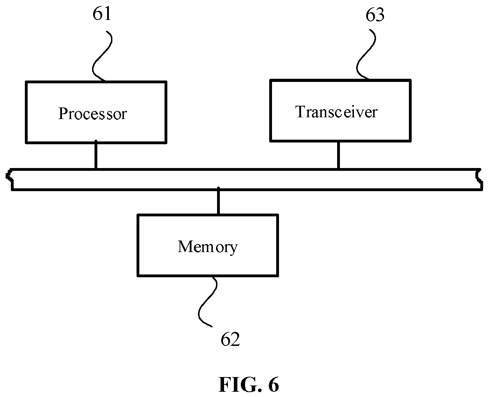

FIG. 6 is a structure schematic diagram of a terminal device according to an embodiment of the disclosure. The terminal device may also be called UE, an access terminal, a user unit, a user station, a mobile radio station, a mobile station, a user terminal, a terminal, a wireless communication device, a user agent or a user device. The terminal device may be a smart phone, a cell phone, a cordless phone, a tablet computer, a PDA device, a handheld computer with a wireless communication function or another processing device, vehicle-mounted device and wearable device connected to a wireless modem, etc. As illustrated in FIG. 6, the terminal device includes a processor 61 and a memory 62.

The memory 62 stores computer-executable instructions.

The processor 61 executes the computer-executable instructions stored in the memory 62, to enable the processor 61 to execute the method for random access.

Optionally, the terminal device further includes a transceiver 63, which is configured to implement communication with another network device (such as an access network device) or terminal device.

The terminal device of the embodiment of the disclosure may be configured to execute the technical solution executed by the terminal device in each method embodiment of the disclosure, and an implementation principle and technical effects thereof are similar and will not be elaborated herein.

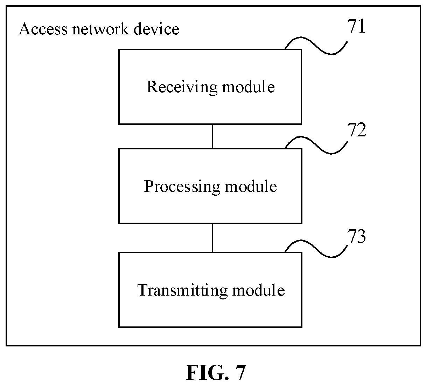

FIG. 7 is a structure schematic diagram of an access network device according to an embodiment of the disclosure. In the embodiment, there is provided an access network device. As illustrated in FIG. 7, the access network device includes a processing module 72 and a transmitting module 73.

The processing module 72 is configured to control a receiving module 71 to receive first information transmitted by a terminal device through an available first resource, and control the receiving module 71 to receive second information transmitted by the terminal device through a second resource, the first information and the second information being configured to request for random access.

The transmitting module 73 is configured to return third information to the terminal device, the third information being configured to indicate whether the random access succeeds.

Optionally, the transmitting module 73 is further configured to transmit reference signal configuration information, first resource configuration information and second resource configuration information to the terminal device, the reference signal configuration information being configured to indicate a reference signal, the first resource configuration information being configured to indicate the first resource and the second resource configuration information being configured to indicate the second resource. The processing module 72 is further configured to associate the reference signal with the first resource, and associate the first resource with the second resource.

Optionally, the processing module 72 is configured to associate one first resource with at least one second resource, the one first resource being associated with at least one reference signal, or associate a plurality of first resources with at least one second resource, the plurality of first resources being associated with one or more reference signals that are same.

Optionally, a period of the first resource is a first period, and a period of the second resource is a second period. The processing module 72 is configured to associate the plurality of first resources, which are associated with one or more reference signals that are the same, within each first period with one second resource within the second period, or associate the plurality of first resources, which are associated with one or more reference signals that are the same, within each first period with a group of second resources within the second period, the group of second resources including a plurality of second resources.

Optionally, the reference signal configuration information further includes the mapping indication information, the mapping indication information being configured to indicate associating Q reference signals with M first resources. The processing module 72 is configured to associate every Z*M first resources, which are associated with Z*Q reference signals that are same, within each first period with the one second resource within the second period respectively, Q being a positive integer, M being a positive integer and M being a positive integer.

Optionally, the reference signal configuration information further includes a number of reference signals. The processing module 72 is configured to associate a 1st first resource to (Z*M)-th first resource, which are associated with Z*Q reference signals that are the same, within each first period with a 1st second resource within the second period, and associate an ((i-1)*Z*M+1)-th first resource to an (i*Z*M)-th first resource, which are associated with Z*Q reference signals that are the same, within each first period with an i-th second resource within the second period, i being valued to be 2 to N/(Z*Q) respectively and N being the number of the reference signals.

Optionally, the processing module 72 is configured to: responsive to that the available first resource is the 1st first resource to the (Z*M)-th first resource, acquire the 1st second resource which corresponds to the 1st first resource to the (Z*M)-th first resource, and control the receiving module 71 to receive the second information transmitted by the terminal device through the 1st second resource; or
responsive to that the available first resource is the ((i-1)*Z*M+1)-th first resource to the (i*Z*M)-th first resource, acquire the i-th second resource which corresponds to the ((i-1)*Z*M+1)-th first resource to the (i*Z*M)-th first resource, and control the receiving module 71 to receive the second information transmitted by the terminal device through the i-th second resource.

Optionally, the reference signal configuration information further includes mapping indication information, the mapping indication information being configured to associate Q reference signals with M first resources. The processing module 72 is configured to associate Z*M first resources, which are associated with Z*Q reference signals that are same, within each first period with the group of second resources within the second period respectively, Q being a positive integer, M being a positive integer and Z being a positive integer.

Optionally, the reference signal configuration information further includes a number of reference signals. The processing module 72 is configured to associate a 1st first resource to (Z*M)-th first resource, which are associated with Z*Q reference signals that are the same, within each first period with a 1st group of second resources within the second period, the 1st group of second resources including a 1st second resource to a K-th second resource; and associate an ((i-1)*Z*M+1)-th first resource to an (i*Z*M)-th first resource, which are associated with Z*Q reference signals that are the same, within each first period with an i-th group of second resources within the second period, the i-th group of second resources including a (K*(i-1)+1)-th second resource to an iK-th second resource, i being valued to be 2 to N/(Z*Q) respectively and N being the number of the reference signals.

The access network device of the embodiment of the disclosure may be configured to execute the technical solution executed by the access network device in each method embodiment of the disclosure, and an implementation principle and technical effects thereof are similar and will not be elaborated herein.

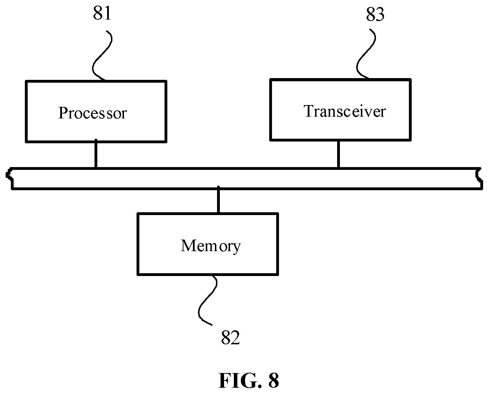

FIG. 8 is a structure schematic diagram of an access network device according to an embodiment of the disclosure. As illustrated in FIG. 8, the access network device includes a processor 81 and a memory 82.

The memory 82 stores computer-executable instructions.

The processor 81 executes the computer-executable instructions stored in the memory 82, to enable the processor 81 to execute the method for random access.

Optionally, the access network device further includes a transceiver 83, which is configured to implement communication with another network device (such as another access network device) or a terminal device.

The access network device of the embodiment of the disclosure may be configured to execute the technical solution executed by the access network device in each method embodiment of the disclosure, and an implementation principle and technical effects thereof are similar and will not be elaborated herein.

The embodiments of the disclosure also provide a computer-readable storage medium, in which computer-executable instructions are stored. The computer-executable instructions are executed by a processor to implement the steps executed by a terminal device or an access network device in any method for random access.

The embodiments of the disclosure also provide a computer program product, which includes computer-executable instructions. The computer-executable instructions are executed by a processor to implement the steps executed by a terminal device or an access network device in any method for random access.

In some embodiments provided by the disclosure, it is to be understood that the disclosed system, device and method may be implemented in another manner. For example, the device embodiment described above is only schematic, and for example, division of the units is only logic function division, and other division manners may be adopted during practical implementation. For example, a plurality of units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to a plurality of network units. Part or all of the units may be selected to achieve the purposes of the solutions of the embodiments according to a practical requirement.

In addition, each functional unit in each embodiment of the disclosure may be integrated into a processing unit, or each unit may physically exist independently, or two or more than two units may be integrated into a unit. The integrated unit may be implemented in a hardware form or may be implemented in form of software functional unit.

It can be understood by those of ordinary skill in the art that all or part of the steps of each method embodiment may be completed by instructing related hardware through a program. The computer program may be stored in a computer-readable storage medium. The computer program is executed by a processor to implement the steps of each method embodiment. The storage medium includes various media capable of storing program codes such as a Read-Only Memory (ROM), a Random Access Memory (RAM), a magnetic disk or an optical disk.

It is finally to be noted that: the above embodiments are adopted not to limit but only to describe the technical solutions of the disclosure. Although the disclosure is described with reference to each embodiment in detail, those of ordinary skill in the art should know that modifications may also be made to the technical solutions recorded in each embodiment or equivalent replacements may be made to part or all of technical features therein. These modifications or replacements do not make the essence of the corresponding technical solutions depart from the scope of the technical solutions of each embodiment of the disclosure.

## Claims

1. A method for random access, comprising:
transmitting, by a terminal device, first information to an access network device through an available first resource, and transmitting, by the terminal device, second information to the access network device through a second resource, the first information and the second information being configured to request for random access; and
receiving, by the terminal device, third information returned by the access network device, the third information being configured to indicate whether the random access succeeds.

2. The method of claim 1, further comprising:
receiving, by the terminal device, reference signal configuration information, first resource configuration information and second resource configuration information which are transmitted by the access network device, the reference signal configuration information being configured to indicate a reference signal, the first resource configuration information being configured to indicate the first resource and the second resource configuration information being configured to indicate the second resource;
associating, by the terminal device, the reference signal with the first resource; and
associating, by the terminal device, the first resource with the second resource.

3. The method of claim 2, wherein associating, by the terminal device, the first resource with the second resource comprises:
associating, by the terminal device, one first resource with at least one second resource, the one first resource being associated with at least one reference signal; or
associating, by the terminal device, a plurality of first resources with at least one second resource, the plurality of first resources being associated with one or more reference signals that are same.

4. The method of claim 3, wherein a period of the first resource is a first period, a period of the second period is a second period, and associating, by the terminal device, the plurality of first resources and the at least one second resource comprises:
associating, by the terminal device, the plurality of first resources, which are associated with one or more reference signals that are the same, within each first period with one second resource within the second period; or
associating, by the terminal device, the plurality of first resources, which are associated with one or more reference signals that are the same, within each first period with a group of second resources within the second period, the group of second resources comprising a plurality of second resources.

5. The method of claim 4, wherein the reference signal configuration information further comprises mapping indication information, the mapping indication information being configured to indicate associating Q reference signals with M first resources; and
associating, by the terminal device, the plurality of first resources, which are associated with the one or more reference signals that are the same, within each first period with the one second resource within the second period comprises:
associating, by the terminal device, every Z*M first resources, which are associated with Z*Q reference signals that are same, within each first period with the one second resource within the second period respectively,
wherein Q is a positive integer, M is a positive integer and Z is a positive integer.

6. The method of claim 5, wherein the reference signal configuration information further comprises a number of reference signals, and associating, by the terminal device, every Z*M first resources, which are associated with Z*Q reference signals that are the same, within each first period with the one second resource within the second period respectively comprises:
associating, by the terminal device, a 1st first resource to a (Z*M)-th first resource, which are associated with Z*Q reference signals that are the same, within each first period with a 1st second resource within the second period; and
associating, by the terminal device, an ((i-1)*Z*M+1)-th first resource to an (i*Z*M)-th first resource, which are associated with Z*Q reference signals that are the same, within each first period with an i-th second resource within the second period,
wherein i is valued to be 2 to N/(Z*Q) respectively and N is the number of the reference signals.

7. The method of claim 6, wherein transmitting, by the terminal device, the second information to the access network device through the second resource comprises:
responsive to that the available first resource is the 1st first resource to the (Z*M)-th first resource, acquiring, by the terminal device, the 1st second resource which corresponds to the 1st first resource to the (Z*M)-th first resource, and transmitting, by the terminal device, the second information to the access network device through the 1st second resource; or
responsive to that the available first resource is the ((i-1)*Z*M+1)-th first resource to the (i*Z*M)-th first resource, acquiring, by the terminal device, the i-th second resource which corresponds to the ((i-1)*Z*M+1)-th first resource to the (i*Z*M)-th first resource, and transmitting, by the terminal device, the second information to the access network device through the i-th second resource.

8. The method of claim 4, wherein the reference signal configuration information further comprises mapping indication information, the mapping indication information being configured to associate Q reference signals with M first resources; and
associating, by the terminal device, the plurality of first resources, which are associated with the one or more reference signals that are the same, within each first period with the group of second resources within the second period comprises:
associating, by the terminal device, every Z*M first resources, which are associated with Z*Q reference signals that are same, within each first period with the group of second resources within the second period respectively,
wherein Q is a positive integer, M is a positive integer and Z is a positive integer.

9. The method of claim 8, wherein the reference signal configuration information further comprises a number of reference signals, and associating, by the terminal device, Z*M first resources, which are associated with Z*Q reference signals that are the same, within each first period with the group of second resources within the second period respectively comprises:
associating, by the terminal device, a 1st first resource to (Z*M)-th first resource, which are associated with Z*Q reference signals that are the same, within each first period with a 1st group of second resources within the second period, the 1st group of second resources comprising a 1st second resource to a K-th second resource; and
associating, by the terminal device, an ((i-1)*Z*M+1)-th first resource to an (i*Z*M)-th first resource, which are associated with Z*Q reference signals that are the same, within each first period with an i-th group of second resources within the second period, the i-th group of second resources comprising a (K*(i-1)+1)-th second resource to an iK-th second resource,
wherein i is valued to be 2 to N/(Z*Q) respectively and N is the number of the reference signals.

10. The method of any one of claims 5-9, wherein an order of the second resources is based on a frequency-domain order and a time-domain order.

11. The method of any one of claims 4-10, wherein the first period comprises any one of:
one or more Physical Random Access Channel (PRACH) configuration periods; or
one or more association periods, the association periods comprising a plurality of PRACH configuration periods; or
one or more Synchronization Signal / Physical Broadcast Channel Blocks (SSBs) to PRACH Occasions (ROs) mapping cycles; or
a first threshold, the first threshold comprising at least one of 10ms, 20ms, 40ms, 80ms or 160ms.

12. The method of any one of claims 4-11, wherein the second period comprises any one of:
one or more first periods; or
one or more PRACH configuration periods; or
one or more association periods, the association periods comprising a plurality of PRACH configuration periods; or
one or more SSBs to ROs mapping cycles; or
a second threshold, the second threshold comprising at least one of 10ms, 20ms, 40ms, 80ms or 160ms.

13. The method of any one of claims 3-12, wherein the reference signal is an SSB or a Channel State Information-Reference Signal (CSI-RS).

14. The method of any one of claims 1-13, wherein the first resource is an RO resource, and the second resource is a Physical Uplink Shared Channel (PUSCH) resource.

15. The method of any one of claims 1-14, wherein transmitting the second information to the access network device through the second resource comprises:
transmitting the second information to the access network device through the second resource within a first time range or a first resource range after a resource position where the first resource is located.

16. The method of claim 15, wherein the first time range is a time range of a third threshold after a starting point or ending point of a time-domain position where the first resource is located, the third threshold comprising at least one of 10ms, 20ms, 40ms, 80ms or 160ms; or
the first time range is a time range of one or more PRACH configuration periods after the starting point or ending point of the time-domain position where the first resource is located; or
the first time range is a time range of one or more association periods after the starting point or ending point of the time-domain position where the first resource is located; or
the first time range is a time range of one or more SSBs to ROs mapping cycles after the starting point or ending point of the time-domain position where the first resource is located.

17. The method of claim 15, wherein the first time range is a time range after a starting point or ending point of the time-domain position where the first resource is located and before a fourth threshold, the fourth threshold being a system frame boundary when a System Frame Number (SFN) mod D=0, D being a positive integer, D being 1, 2, 4, 8 or 16, and mod representing a remainder calculation operation; or
the first time range is a time range after the starting point or ending point of the time-domain position where the first resource is located and before a time boundary of one or more PRACH configuration periods; or
the first time range is a time range after the starting point or ending point of the time-domain position where the first resource is located and before a time boundary of one or more association periods; or
the first time range is a time range after the starting point or ending point of the time-domain position where the first resource is located and before a time boundary of one or more SSBs to ROs mapping cycles.

18. The method of claim 15, wherein
the first resource range is L second resources after a starting point or ending point of the time-domain position where the first resource is located; or
the first resource range is L second resources after a preset time point after the starting point or ending point of the time-domain position where the first resource is located; or
the first resource range is a L-th second resource after the starting point or ending point of the time-domain position where the first resource is located; or
the first resource range is a L-th second resource after the preset time point after the starting point or ending point of the time-domain position where the first resource is located.

19. The method of any one of claims 1-18, wherein a message A in two-step random access comprises the first information and the second information, and the third information is a message B in two-step random access.

20. The method of any one of claims 1-19, wherein the first information comprises a preamble, and the second information comprises at least one of a user Identifier (ID) or data.

21. A method for random access, comprising:
receiving, by an access network device, first information transmitted by a terminal device through an available first resource, and receiving, by an access network device, second information transmitted by the terminal device through a second resource, the first information and the second information being configured to request for random access; and
returning, by the access network device, third information to the terminal device, the third information being configured to indicate whether the random access succeeds.

22. The method of claim 21, further comprising:
transmitting, by the access network device, reference signal configuration information, first resource configuration information and second resource configuration information to the terminal device, the reference signal configuration information being configured to indicate a reference signal, the first resource configuration information being configured to indicate the first resource and the second resource configuration information being configured to indicate the second resource;
associating, by the access network device, the reference signal with the first resource; and
associating, by the access network device, the first resource with the second resource.

23. The method of claim 22, wherein associating, by the access network device, the first resource with the second resource comprises:
associating, by the access network device, one first resource with at least one second resource, the one first resource being associated with at least one reference signal; or
associating, by the access network device, a plurality of first resources with at least one second resource, the plurality of first resources being associated with one or more reference signals that are the same.

24. The method of claim 23, wherein a period of the first resource is a first period, a period of the second period is a second period, and associating, by the access network device, the plurality of first resources and the at least one second resource comprises:
associating, by the access network device, the plurality of first resources, which are associated with the one or more reference signals that are the same, within each first period with one second resource within the second period; or
associating, by the access network device, the plurality of first resources, which are associated with the one or more reference signals that are the same, within each first period with a group of second resources within the second period, the group of second resources comprising a plurality of second resources.

25. The method of claim 24, wherein the reference signal configuration information further comprises mapping indication information, the mapping indication information being configured to indicate associating Q reference signals with M first resources; and
associating, by the access network device, the plurality of first resources, which are associated with the one or more reference signals that are the same, within each first period with the one second resource within the second period comprises:
associating, by the access network device, every Z*M first resources, which are associated with Z*Q reference signals that are same, within each first period with one second resource within the second period respectively,
wherein Q is a positive integer, M is a positive integer and Z is a positive integer.

26. The method of claim 25, wherein the reference signal configuration information further comprises a number of reference signals, and associating, by the access network device, every Z*M first resources, which are associated with Z*Q reference signals that are the same, within each first period with the one second resource within the second period respectively comprises:
associating, by the access network device, a 1st first resource to a (Z*M)-th first resource, which are associated with Z*Q reference signals that are the same, within each first period with a 1st second resource within the second period; and
associating, by the access network device, an ((i-1)*Z*M+1)-th first resource to an (i*Z*M)-th first resource, which are associated with Z*Q reference signals that are the same, within each first period with an i-th second resource within the second period,
wherein i is valued to be 2 to N/(Z*Q) respectively and N is the number of the reference signals.

27. The method of claim 26, wherein receiving, by the access network device, the second information transmitted by the terminal device through the second resource comprises:
responsive to that the available first resource is the 1st first resource to the (Z*M)-th first resource, acquiring, by the access network device, the 1st second resource which corresponds to the 1st first resource to the (Z*M)-th first resource, and receiving, by the access network device, the second information transmitted by the terminal device through the 1st second resource; or
responsive to that the available first resource is the ((i-1)*Z*M+1)-th first resource to the (i*Z*M)-th first resource, acquiring, by the access network device, the i-th second resource which corresponds to the ((i-1)*Z*M+1)-th first resource to the (i*Z*M)-th first resource, and receiving, by the access network device, the second information transmitted by the terminal device through the i-th second resource.

28. The method of claim 24, wherein the reference signal configuration information further comprises mapping indication information, the mapping indication information being configured to associate Q reference signals with M first resources; and
associating, by the access network device, the plurality of first resources, which are associated with one or more reference signals that are the same, within each first period with the group of second resources within the second period comprises:
associating, by the access network device, every Z*M first resources, which are associated with Z*Q reference signals that are same, within each first period with the group of second resources within the second period respectively,
wherein Q is a positive integer, M is a positive integer and Z is a positive integer.

29. The method of claim 28, wherein the reference signal configuration information further comprises a number of reference signals, and associating, by the access network device, every Z*M first resources, which are associated with Z*Q reference signals that are the same, within each first period with the group of second resources within the second period respectively comprises:
associating, by the access network device, a 1st first resource to a (Z*M)-th first resource, which are associated with Z*Q reference signals that are the same, within each first period with a 1st group of second resources within the second period, the 1st group of second resources comprising a 1st second resource to a K-th second resource; and
associating, by the access network device, an ((i-1)*Z*M+1)-th first resource to an (i*Z*M)-th first resource, which are associated with Z*Q reference signals that are the same, within each first period with an i-th group of second resources within the second period, the i-th group of second resources comprising a (K*(i-1)+1)-th second resource to an iK-th second resource,
wherein i is valued to be 2 to N/(Z*Q) respectively and N is the number of the reference signals.

30. A terminal device, comprising:
a processing module, configured to control a transmitting module to transmit first information to an access network device through an available first resource, and control the transmitting module to transmit second information to the access network device through a second resource, the first information and the second information being configured to request for random access; and
a receiving module, configured to receive third information returned by the access network device, the third information being configured to indicate whether the random access succeeds.

31. The terminal device of claim 30, wherein the receiving module is further configured to receive reference signal configuration information, first resource configuration information and second resource configuration information which are transmitted by the access network device, the reference signal configuration information being configured to indicate a reference signal, the first resource configuration information being configured to indicate the first resource and the second resource configuration information being configured to indicate the second resource;
the processing module is further configured to associate the reference signal with the first resource; and
the processing module is further configured to associate the first resource with the second resource.

32. The terminal device of claim 31, wherein the processing module is configured to:
associate one first resource with at least one second resource, the one first resource being associated with at least one reference signal; or
associate a plurality of first resources with at least one second resource, the plurality of first resources being associated with one or more reference signals that are same.

33. The terminal device of claim 32, wherein a period of the first resource is a first period, a period of the second resource is a second period, and the processing module is configured to:
associate the plurality of first resources, which are associated with one or more reference signals that are the same, within each first period with one second resource within the second period; or
associate the plurality of first resources, which are associated with one or more reference signals that are the same, within each first period with a group of second resources within the second period, the group of second resources comprising a plurality of second resources.

34. The terminal device of claim 33, wherein the reference signal configuration information further comprises mapping indication information, the mapping indication information being configured to indicate associating Q reference signals with M first resources; and
the processing module is configured to associate every Z*M first resources, which are associated with Z*Q reference signals that are same, within each first period with the one second resource within the second period respectively,
wherein Q is a positive integer, M is a positive integer and Z is a positive integer.

35. The terminal device of claim 34, wherein the reference signal configuration information further comprises a number of reference signals, and the processing module is configured to:
associate a 1st first resource to a (Z*M)-th first resource, which are associated with Z*Q reference signals that are the same, within each first period with a 1st second resource within the second period; and
associate an ((i-1)*Z*M+1)-th first resource to an (i*Z*M)-th first resource, which are associated with Z*Q reference signals that are the same, within each first period with an i-th second resource within the second period,
wherein i is valued to be 2 to N/(Z*Q) respectively and N is the number of the reference signals.

36. The terminal device of claim 35, wherein the processing module is configured to:
responsive to that the available first resource is the 1st first resource to the (Z*M)-th first resource, acquire the 1st second resource which corresponds to the 1st first resource to the (Z*M)-th first resource, and control the transmitting module to transmit the second information to the access network device through the 1st second resource; or
responsive to that the available first resource is the ((i-1)*Z*M+1)-th first resource to the (i*Z*M)-th first resource, acquire the i-th second resource which corresponds to the ((i-1)*Z*M+1)-th first resource to the (i*Z*M)-th first resource, and control the transmitting module to transmit the second information to the access network device through the i-th second resource.

37. The terminal device of claim 33, wherein the reference signal configuration information further comprises mapping indication information, the mapping indication information being configured to associate Q reference signals with M first resources; and
the processing module is configured to associate every Z*M first resources, which are associated with Z*Q reference signals that are same, within each first period with the group of second resources within the second period respectively,
wherein Q is a positive integer, M is a positive integer and Z is a positive integer.

38. The terminal device of claim 37, wherein the reference signal configuration information further comprises a number of reference signals, and the processing module is configured to:
associate a 1st first resource to a (Z*M)-th first resource, which are associated with Z*Q reference signals that are the same, within each first period with a 1st group of second resources within the second period, the 1st group of second resources comprising a 1st second resource to a K-th second resource; and
associate an ((i-1)*Z*M+1)-th first resource to an (i*Z*M)-th first resource, which are associated with Z*Q reference signals that are the same, within each first period with an i-th group of second resources within the second period, the i-th group of second resources comprising a (K*(i-1)+1)-th second resource to an iK-th second resource,
wherein i is valued to be 2 to N/(Z*Q) respectively and N is the number of the reference signals.

39. An access network device, comprising:
a processing module, configured to control a receiving module to receive first information transmitted by a terminal device through an available first resource, and control the receiving module to receive second information transmitted by the terminal device through a second resource, the first information and the second information being configured to request for random access; and
a transmitting module, configured to return third information to the terminal device, the third information being configured to indicate whether the random access succeeds.

40. The access network device of claim 39, wherein the transmitting module is further configured to transmit reference signal configuration information, first resource configuration information and second resource configuration information to the terminal device, the reference signal configuration information being configured to indicate a reference signal, the first resource configuration information being configured to indicate the first resource and the second resource configuration information being configured to indicate the second resource;
the processing module is further configured to associate the reference signal with the first resource; and
the processing module is further configured to associate the first resource with the second resource.

41. A terminal device, comprising a processor and a memory, wherein
the memory stores computer-executable instructions; and
the processor executes the computer-executable instructions stored in the memory, to enable the processor to execute the method for random access of any one of claims 1-20.

42. An access network device, comprising a processor and a memory, wherein
the memory stores computer-executable instructions; and
the processor executes the computer-executable instructions stored in the memory, to enable the processor to execute the method for random access of any one of claims 21-29.

43. A computer-readable storage medium, wherein computer-executable instructions are stored in the computer-readable storage medium, and the computer-executable instructions are executed by a processor to implement the method for random access of any one of claims 1-20 or implement the method for random access of any one of claims 21-29.
